# EUROPEAN PATENT APPLICATION

(11) **EP 4 280 328 A1**
(43) Date of publication of application: **22.11.2023**
(21) Application number: 22856303.7
(22) Date of filing: 12.08.2022
(51) Int. Cl.: H01M 10/04, H01M 50/46

(54) **ELECTRODE ASSEMBLLY FOR SECONDARY BATTERY, AND MANUFACTURING METHOD THEREFOR**

(30) Priority: 13.08.2021 KR 20210107606
(71) Applicant: LG Energy Solution, Ltd., Seoul 07335 (KR)
(72) Inventor: KIM, Sung Hwan, Daejeon 34122 (KR); PARK, Sung Bin, Daejeon 34122 (KR); LEE, Seok Kyeong, Daejeon 34122 (KR); JO, Mi Ru, Daejeon 34122 (KR); CHO, Woo Hyung, Daejeon 34122 (KR)
(74) Representative: Plasseraud IP
(86) International application number: PCT/KR2022/012146
(87) International publication number: WO 2023/018310

(57) **Abstract**

The present invention relates to a method of preparing an electrode assembly capable of improving life characteristics and rapid charging performance by minimizing a space between a folding separator and an electrode, wherein it relates to a method of preparing an electrode assembly which includes the steps of disposing a plurality of unit cells on one surface of a folding separator; fixing the unit cells on the folding separator; providing a binder composition to at least one end portion of the other surface of the folding separator; and stacking the unit cells by folding the folding separator.

## Description

### TECHNICAL FIELD

This application claims priority from Korean Patent Application No. 10-2021-0107606, filed on August 13, 2021, the disclosure of which is incorporated by reference herein.

The present invention relates to an electrode assembly for a secondary battery and a preparation method thereof, and more particularly, to a stack and folding type electrode assembly having excellent life characteristics and rapid charging performance and a preparation method thereof.

### BACKGROUND ART

Demand for secondary batteries as an energy source has been significantly increased as technology development and demand with respect to mobile devices have increased, and, among these secondary batteries, lithium secondary batteries having high energy density, high operating potential, long cycle life, and low self-discharging rate have been commercialized and widely used.

Lithium secondary batteries are generally prepared by accommodating an electrode assembly, in which a positive electrode, a separator, and a negative electrode are stacked, in a battery case and injecting an electrolyte solution, and the electrode assembly may be classified into a jelly-roll type, a stacked type, a stack and folding type, and the like according to a preparation method thereof. Specifically, the jelly-roll type electrode assembly is prepared by winding a long sheet-shaped positive electrode plate, separator, and negative electrode plate, and the stacked type electrode assembly is prepared by stacking a positive electrode, a separator, and a negative electrode which are cut to a predetermined size. Also, the stack and folding electrode assembly is prepared by arranging unit cells, in which a positive electrode, a separator, and a negative electrode are stacked side by side on a long sheet-shaped folding separator and then folding it from one side.

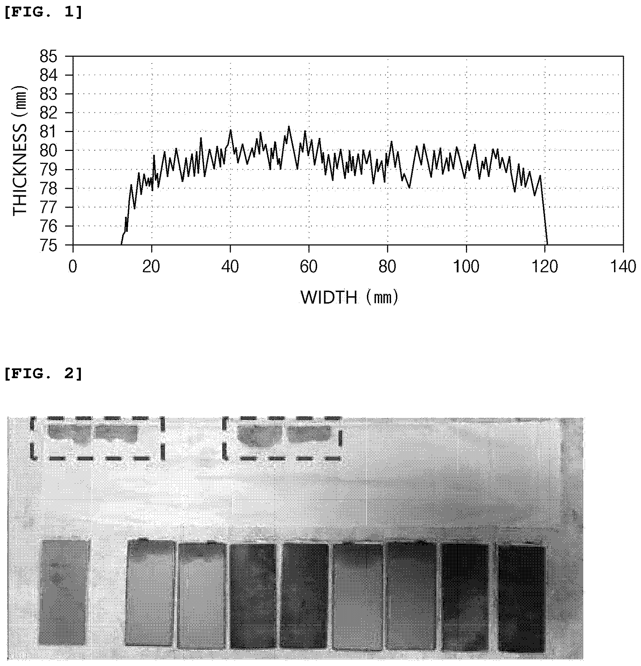

An electrode for a lithium secondary battery is prepared by a method in which a current collector is coated with an electrode slurry to form an active material layer and then rolled, wherein, in the electrode prepared by such a method, since an amount of the slurry applied to an end portion of the active material layer is reduced, a phenomenon (hereinafter, referred to as a sliding phenomenon) occurs in which a thickness of the active material layer is reduced in comparison to a central portion. FIG. 1 is a view illustrating a thickness distribution of the active material layer in a width direction of the electrode which is prepared by coating the electrode slurry on the current collector. Through FIG. 1, it may be confirmed that the sliding phenomenon, in which the thickness of the active material layer is reduced at an electrode end portion, occurred.

A space is created between the electrode and the separator at the electrode end portion due to this sliding phenomenon, wherein, if the space between the electrode and the separator exists, it acts as diffusion resistance of lithium ions, and thus, a problem occurs in which lithium ions do not move smoothly in the corresponding region and are precipitated.

The problem of spacing between the electrode and the separator may be minimized by compressing a gap between the electrode and the separator through a heating and pressing process during the preparation of the electrode assembly. The reason for this is that a binder included in the electrode active material layer and/or separator coating layer is pushed out into the space while being melted to be able to fill the space in the above compression process.

However, with respect to the stack and folding type electrode assembly, the folding separator and the electrode are not compressed due to the nature of the preparation process, but an interface where the folding separator and the electrode are only in simple contact with each other is formed, and there is a problem in that lithium precipitation occurs because a space between the electrode and the separator is formed at this interface. FIG. 2 is a photograph taken after disassembling a battery cell using a conventional stack and folding type electrode assembly, wherein, through FIG. 2, it may be confirmed that the lithium precipitation occurs at portions (portions indicated by a box) where a lower surface of the folding separator and the unit cell are in contact with each other.

### DISCLOSURE OF THE INVENTION

### TECHNICAL PROBLEM

An aspect of the present invention provides an electrode assembly capable of improving life characteristics and rapid charging performance by minimizing a space between a folding separator and an electrode and a preparation method thereof.

### TECHNICAL SOLUTION

According to an aspect of the present invention, there is provided a method of preparing an electrode assembly which includes steps of: disposing a plurality of unit cells on one surface of a folding separator, fixing the unit cells on the folding separator, providing a binder composition to at least one end portion of another surface of the folding separator, and stacking the unit cells by folding the folding separator.

In this case, the fixing of the unit cells may be performed by heating and pressing the folding separator on which the unit cells are disposed.

Also, the binder composition may be applied along a longitudinal direction of the folding separator, and may be provided at an end portion in a direction in which an electrode tab of the unit cell is disposed.

Furthermore, the binder composition may be provided such that a binder application amount is in a range of 0.1 g/m² to 1 g/m².

Also, the binder composition may be provided in a region at a distance of 0.15 W from an end of the folding separator when a width of the folding separator is W.

The binder composition may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), a fluorine rubber, or various copolymers thereof, as a binder, and it is particularly desirable that the binder composition includes an aqueous binder, such as the styrene-butadiene rubber, among them.

According to another aspect of the present invention, there is provided an electrode assembly in which a plurality of unit cells including a positive electrode, a separator, and a negative electrode are stacked by being wound by a long sheet-shaped folding separator, wherein the unit cell includes a sliding portion, in which a thickness of an electrode active material layer is reduced, at least one end of an outermost electrode, and a binder coating layer is formed between the sliding portion and the folding separator.

According to another aspect of the present invention, there is provided a secondary battery including the above-described electrode assembly according to the present invention.

### ADVANTAGEOUS EFFECTS

The present invention is characterized in that a folding process is performed after a binder composition is provided on a surface of a folding separator where a unit cell is not disposed during preparation of a stack and folding type electrode assembly. In a case in which the folding process is performed after the binder composition is provided on the surface where the unit cell is not disposed as in the present invention, the binder composition is disposed between an outermost electrode of the unit cell and the folding separator to fill a space between the electrode and the folding separator, and, accordingly, lithium ion precipitation caused by spacing between the electrode and the folding separator may be minimized. Thus, in a case in which the electrode assembly prepared according to a method of the present invention is used in a secondary battery, excellent long-term life characteristics and rapid charging performance may be achieved.

### BRIEF DESCRIPTION OF THE DRAWINGS

FIG. 1 is a graph illustrating a thickness distribution of an active material layer of an electrode which is prepared by electrode slurry coating.
FIG. 2 is a photograph showing a lithium precipitation phenomenon of a battery cell in which a conventional stack and folding electrode assembly is used.
FIG. 3 is a view illustrating a preparation process of an electrode assembly according to an embodiment of the present invention.
FIG. 4 is a view for explaining a binder composition providing step.
FIG. 5 is a view illustrating an example of the electrode assembly according to the present invention.

### MODE FOR CARRYING OUT THE INVENTION

Hereinafter, the present invention will be described in detail with reference to the accompanying drawings. The drawings of the present invention are provided so that those skilled in the art can clearly understand the present invention, and the present invention is not limited by the invention disclosed in the drawings.

Also, in order to clearly explain the present invention, some components may be omitted in the drawings, and the same components are indicated by the same reference numerals.

### Method of Preparing Electrode Assembly

First, a method of preparing an electrode assembly according to the present invention will be described.

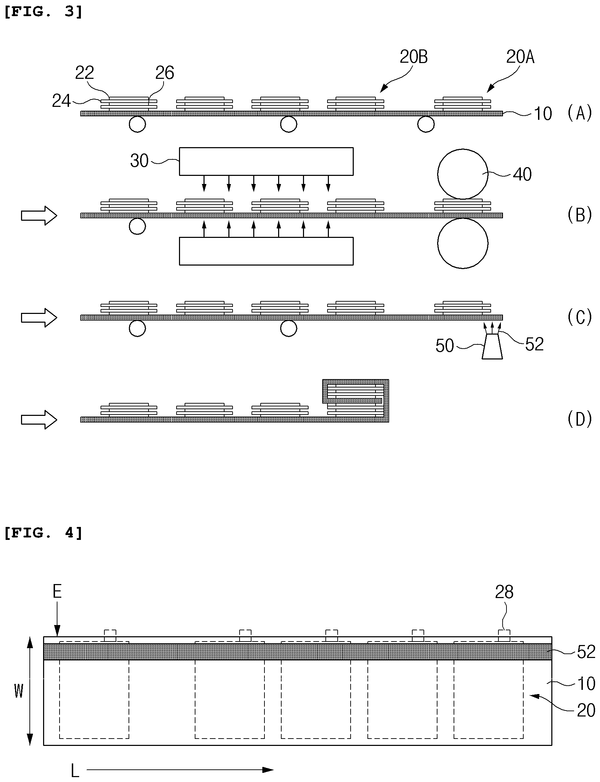

An embodiment of the method of preparing an electrode assembly according to the present invention is illustrated in FIG. 3. Hereinafter, the method of preparing an electrode assembly according to the present invention will be described with reference to FIG. 3.

As illustrated in FIG. 3, the method of preparing an electrode assembly according to the present invention includes the steps of (A) disposing a plurality of unit cells on one surface of a folding separator, (B) fixing the unit cells on the folding separator, (C) applying a binder composition to at least one end portion of the other surface of the folding separator, and (D) stacking the unit cells by folding the folding separator.

First, a plurality of unit cells 20A and 20B are disposed on one surface of a folding separator 10 (see (A) of FIG. 3).

The unit cells 20A and 20B are an electrode stack in which a positive electrode 22, a separator 24, and a negative electrode 26, which are cut to a predetermined size, are stacked. The unit cell, as illustrated in FIG. 3, may have a bi-cell structure in which the same electrodes are disposed on outermost sides, for example, the positive electrode 22/the separator 24/the negative electrode 26/the separator 24/the positive electrode 22 or the negative electrode 26/the separator 24/the positive electrode 22/the separator 24/the negative electrode 26, but the present invention is not limited thereto, and a full-cell structure having the same number of positive electrodes and negative electrodes, for example, the positive electrode/the separator/the negative electrode, is also acceptable. Also, although it is illustrated in FIG. 3 that the bi-cell-structured electrode stack is composed of five layers, the present invention is not limited thereto, and the number of stacks of the electrode and the separator may be variously modified.

The folding separator 10 is a long sheet-shaped separator, wherein it is distinguished from the cut-out separator 24 included in the unit cell. As the folding separator 10, various separators used in the art may be used, and, for example, the folding separator may be a separator in which ceramic particles and/or a polymer material, such as a binder, are coated on a surface of a polyolefin-based porous polymer film.

The plurality of unit cells 20A and 20B are disposed on the folding separator 10. In this case, the neighboring unit cells are arranged so that the negative electrode 26 and the positive electrode 22 may be stacked with the folding separator 10 disposed therebetween when being folded.

Next, the unit cells 20A and 20B are fixed on the folding separator 10 so that the unit cells 20A and 20B do not move during a folding process (see (B) of FIG. 3).

The fixing of the unit cells 20A and 20B may be performed by a method of heating and pressing the folding separator 10 on which the unit cells 20A and 20B are disposed. In a case in which a heating and pressing process is performed, the unit cell and the folding separator are adhered and fixed while a binder component included in an electrode active material layer and/or a coating layer of the folding separator is melted by heat. Specifically, after heat is applied to the folding separator 10, on which the unit cells 20A and 20B are disposed, through a heating means 30 such as a heater, the unit cells 20A and 20B are adhered to the folding separator 10 by pressing the unit cells 20A and 20B through a pressing means 40 such as a roll press, and thus, the unit cells may be fixed.

Also, in the heating and pressing process, the binder included in the electrode active material layer and/or the folding separator coating layer is pushed out into a space between the folding separator and the electrode in a thickness reduction region (hereinafter, referred to as a sliding portion) of the active material layer at an end portion of the electrode so that a space between the folding separator and the unit cell is reduced, and, accordingly, an effect of suppressing lithium precipitation due to spacing between the folding separator and the electrode may be obtained.

The heating may be performed under a temperature condition of 50°C to 150°C, preferably 60°C to 120°C, and more preferably 70°C to 90°C.

Also, the pressing may be performed under a pressure condition of 10 kPa to 300 kPa, preferably 50 kPa to 250 kPa, and more preferably 100 kPa to 200 kPa.

In a case in which the heating and/or the pressing satisfy the above conditions, the fixing of the unit cell and the folding separator and the space reduction may be smoothly performed without damage to components of the unit cell or the folding separator.

Next, if the unit cells 20A and 20B are fixed on one surface of the folding separator 10, a binder composition 52 is provided on the other surface of the folding separator 10 (see (C) of FIG. 3). In this case, the other surface means a surface on which the unit cell is not disposed, that is, a surface opposite to the surface of the folding separator on which the unit cells are disposed.

This step is to minimize a space between the other surface of the folding separator and the unit cell after the folding process. As described above, the space at an interface between the unit cell and the surface (one surface) of the folding separator on which the unit cells are disposed may be minimized through the unit cell fixing step, but a space due to the sliding phenomenon of the active material layer still remains on a surface where the unit cell is in contact with the surface (the other surface) of the folding separator on which the unit cell is not disposed after folding. If such a space exists, diffusion of lithium ions is inhibited so that the lithium ions are precipitated in the corresponding region, and, as a result, life characteristics and rapid charging performance may be degraded.

In the present invention, in order to solve the above problems, the binder composition is allowed to fill the space between the folding separator and the unit cell during the folding process by providing the binder composition on the other surface of the folding separator immediately before the folding process of stacking the unit cells by folding the folding separator and by performing the folding process.

In this case, a method of providing the binder composition 52 is not particularly limited, and may be performed through methods of applying a composition which are well known in the art, for example, methods such as spraying, bar coating, and roller coating.

It is desirable that the binder composition 52 is provided at least one end portion of the other surface of the folding separator 10. Since the sliding portion, in which a thickness of the electrode active material layer is reduced, is usually formed at the end portion of the electrode, a space between the folding separator and the sliding portion may be effectively reduced by providing the binder composition to the end portion of the folding separator which corresponds to the electrode end portion.

FIG. 4 shows an example of the other surface of the folding separator which is provided with the binder composition according to the method of the present invention. As shown in FIG. 4, the binder composition 52 may be provided along a longitudinal direction L of the folding separator 10. Also, the binder composition 52 may be provided at an end portion in a direction in which an electrode tab 28 of a unit cell 20 is disposed. Since the sliding portion of the electrode active material layer is typically disposed in the electrode tab direction, it is effective in reducing the space due to the sliding portion when the binder composition is provided along the longitudinal direction of the folding separator to the end portion in the direction in which the electrode tab is disposed as shown in FIG. 4.

The binder composition 52 may be provided in a region at a distance of 0.15 W from an end (E) of the folding separator when a width of the folding separator is W, may be specifically provided in a region at a distance of 0.01 W to 0.15 W from the end (E) of the folding separator, and may be more specifically provided in a region at a distance of 3 mm to 10 mm from the end of the folding separator. When the region provided with the binder composition satisfies the above conditions, the binder may fill the space between the folding separator and the sliding portion by being smoothly disposed in the space. If the region provided with the binder composition is excessively narrow, the binder may not sufficiently fill the space, and if the region provided with the binder composition is excessively wide, since an amount of the binder composition used is increased, costs are not only increased, but it may also adversely affect processability in the folding process due to the surplus binder composition.

Also, the binder composition may be provided such that a binder application amount is in a range of 0.1 g/m² to 1 g/m², preferably 0.1 g/m² to 0.8 g/m², and more preferably 0.3 g/m² to 0.5 g/m². When the binder application amount satisfies the above range, a side effect due to the surplus binder may be minimized while the space is effectively reduced.

The binder composition may include a binder and a solvent.

As the binder, various binders used in the field of secondary batteries, for example, polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), a fluorine rubber, or various copolymers thereof may be used.

It is particularly desirable that the binder composition includes an aqueous binder, such as the styrene-butadiene rubber, among them. In general, an aqueous binder is used for the coating layer of the folding separator and the negative electrode where the lithium precipitation occurs. Thus, in a case in which the aqueous binder is used as the binder, since adhesion between the folding separator and the negative electrode is improved, the space may be more smoothly removed, and, as a result, the lithium precipitation may be more effectively suppressed.

The solvent is for dissolving or dispersing binder components so that they may be applied, wherein an appropriate solvent may be selected and used according to the binder used. For example, in the case that the aqueous binder is used, water may be used as the solvent, and, in a case in which a nonaqueous binder is used, an organic solvent, such as N-methylpyrrolidone, acetone, and alcohol, may be used as the solvent. The solvent may be used in an amount such that the binder composition has appropriate viscosity for application.

Also, although not essential, an additive, such as inorganic particles, a solid electrolyte, and an ion conductive polymer, may be additionally included in the binder composition to improve electrolyte solution impregnation property, conductivity, or resistance property, etc.

A drying process for removing the solvent may be additionally performed after the application of the binder composition, if necessary.

Next, the unit cells 20A and 20B are stacked by folding the folding separator 10 (see (D) of FIG. 3). Since the binder composition applied to a lower surface of the folding separator 10 has flexibility, it reduces the spacing while being inserted into the space between the folding separator and the unit cell during the folding process.

After the folding is completed to complete the stacking of the unit cells, a step of heating and/or pressing the electrode assembly, in which the unit cells are stacked, may be additionally performed, if necessary.

The heating and/or pressing process is for fixing the folding separator and closely attaching the unit cells.

In this case, the heating may be performed under a temperature condition of 50°C to 150°C, preferably 60°C to 120°C, and more preferably 70°C to 90°C.

Also, the pressing may be performed under a pressure condition of 10 kPa to 300 kPa, preferably 50 kPa to 250 kPa, and more preferably 100 kPa to 200 kPa.

In a case in which such a process is additionally preformed, since adhesion of the binder inserted into the space is increased by heating and/or pressing, it is not only more effective in reducing the spacing, but it is also advantageous in that a separate drying process is not required because the solvent in the binder composition may be volatilized during the above process. Also, an effect of improving electrochemical properties is also obtained as the components in the electrode assembly and the unit cell are closely attached by the pressing.

### Electrode Assembly

Next, an electrode assembly according to the present invention will be described.

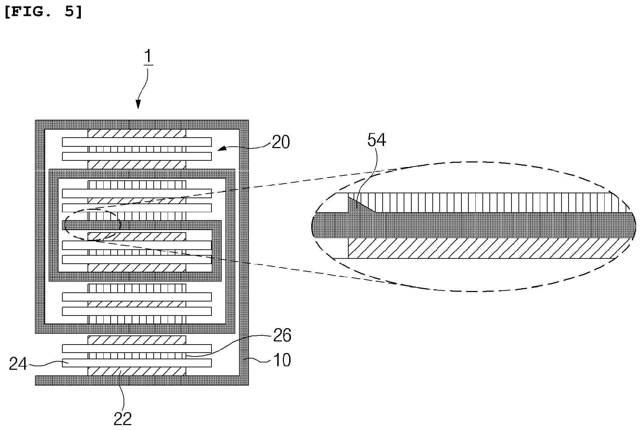

An example of the electrode assembly according to the present invention is shown in FIG. 5.

As shown in FIG. 5, an electrode assembly 1 of the present invention is an electrode assembly in which a plurality of unit cells 20 are stacked by being wound by the long sheet-shaped folding separator 10.

The unit cell 20 is an electrode stack in which at least one positive electrode 22 and at least one negative electrode 26 are alternatingly stacked with the separator 24 disposed therebetween, and the positive electrode 22, the negative electrode 26, and the separator 24 are cut to a predetermined size.

As the positive electrode, negative electrode, and separator included in the unit cell 20, various positive electrodes, negative electrodes, and separators, which are used in the field of secondary batteries, may be used, and materials or shapes thereof are not particularly limited.

For example, the positive electrode 24 may be prepared by a method of forming a positive electrode active material layer by coating a positive electrode material mixture including a positive electrode active material, a binder, and a conductive agent on one side or both sides of a positive electrode collector, and the negative electrode 26 may be prepared by a method of forming a negative electrode active material layer by coating a negative electrode material mixture including a negative electrode active material, a binder, and a conductive agent on one side or both sides of the negative electrode collector.

As the positive electrode active material, various materials used in the art, for example, a lithium transition metal oxide, such as lithium cobalt-based oxide, lithium nickel-based oxide, lithium manganese-based oxide, lithium nickel-cobalt-manganese-based oxide, lithium nickel-cobalt-aluminum-based oxide, and lithium nickel-cobalt-manganese-aluminum-based oxide, may be used, but the present invention is not limited thereto.

As the negative electrode active material, various materials used in the art, for example, a carbon-based material such as natural graphite, artificial graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and carbonaceous material, such as a Si-C composite or a Sn-C composite, may be included, but the present invention is not limited thereto.

The binder is a component that assists in binding between the current collector and the active material and between the active material and the active material, wherein polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof may be used, but the present invention is not limited thereto.

The conductive agent is a component for improving conductivity of the electrode, wherein, for example, polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof may be used, but the present invention is not limited thereto.

The separator means a separator that is cut to a predetermined size and disposed between the positive electrode and the negative electrode of the unit cell, wherein it is used as a concept distinct from the long sheet-shaped folding separator. As the separator, separators generally used in the art may be used, and materials thereof are not particularly limited. For example, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The unit cell 20 may have a full-cell structure including the same number of positive electrodes and negative electrodes, and may have a bi-cell structure in which the number of ones of the positive electrodes and the negative electrodes is one more than the number of the other ones so that the electrodes having the same polarity are disposed on an outermost upper surface and an outermost lower surface of the electrode stack.

In FIG. 5, a unit cell having a bi-cell structure, in which three electrodes are stacked with two separators disposed therebetween, is illustrated as the unit cell 20, but the present invention is not limited thereto, and the number of electrodes and separators may be variously modified.

The folding separator 10 is a long sheet-shaped separator, wherein it is folded in the form of wrapping the unit cells 20. Various separators used in the art may be used as the folding separator 10, and, for example, the folding separator 10 may be a separator in which ceramic particles and/or a polymer material, such as the binder, are coated on a surface of a polyolefin-based porous polymer film.

The unit cell 20 includes a sliding portion, in which the thickness of the electrode active material layer is reduced, at least one end of an outermost electrode in contact with the folding separator 10, and a binder coating layer 54 is formed between the sliding portion and the folding separator, (see an enlarged view of FIG. 5).

As described above, in a case in which the electrode active material layer is formed through a slurry coating process, since an amount of coating slurry is reduced at a coating end portion, a sliding portion, in which the thickness of the active material layer is reduced, occurs. The sliding portion may be relieved to a certain extent while undergoing the heating and/or pressing process. However, with respect to a conventional stack and folding type electrode assembly, the folding separator and the electrode are not compressed due to the nature of the folding process, but an interface where the folding separator and the electrode are only in simple contact with each other is formed, and, since the sliding portion is not relieved in the electrode disposed at the interface, the space between the folding separator and the electrode remains. However, with respect to the electrode assembly 1 of the present invention, since the binder composition is provided to the other surface of the folding separator immediately before the folding process and the binder coating layer is formed between the sliding portion and the folding separator by the binder composition, an effect of reducing the space may be obtained.

In a case in which the binder coating layer is formed between the sliding portion and the folding separator as in the present invention, lithium diffusion is smoothly performed in comparison to a case where the space exists, and, as a result, a lithium ion precipitation phenomenon caused by lithium diffusion resistance may be significantly reduced.

The binder coating layer 54 may include various binders used in the field of secondary batteries, for example, polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), a fluorine rubber, or various copolymers thereof, and it is particularly desirable that the binder coating layer includes an aqueous binder, such as the styrene-butadiene rubber, among them.

The electrode assembly of the present invention as described above may be suitably used in a secondary battery.

Specifically, the secondary battery according to the present invention includes a battery case, and an electrode assembly and an electrolyte which are accommodated in the battery case, wherein, in this case, the electrode assembly is the above-described electrode assembly according to the present invention.

The battery case may be various battery cases used in the art, for example, a prismatic, cylindrical, or pouch type battery case, and, among them, the pouch type battery case is preferable.

As the electrolyte, common electrolytes in the field of secondary batteries, for example, an organic liquid electrolyte, an inorganic liquid electrolyte, a solid polymer electrolyte, a gel-type polymer electrolyte, a solid inorganic electrolyte, or a molten-type inorganic electrolyte may be used, and a type thereof is not particularly limited.

The secondary battery may preferably be a lithium ion battery or a lithium ion polymer battery, but is not limited thereto.

In the lithium secondary battery according to the present invention, since the space between the folding separator and the unit cell is minimized, the lithium precipitation is suppressed, and, as a result, the lithium secondary battery exhibits excellent long-term life characteristics and rapid charging performance. Thus, the lithium secondary battery according to the present invention may be suitably used in portable devices, such as mobile phones, notebook computers, and digital cameras, electric cars including an electric vehicle (EV), a hybrid electric vehicle, and a plug-in hybrid electric vehicle (PHEV); or a power storage system.

### <Description of the Symbols>

| | | | |
|---|---|---|---|
| 10: | Folding Separator | 20, 20A, 20B: | Unit Cells |
| 22: | Positive Electrode | 24: | Separator |
| 26: | Negative Electrode | 28: | Electrode Tab |
| 30: | Heating Means | 40: | Pressing Means |

## Claims

1. A method of preparing an electrode assembly, the method comprising:
disposing a plurality of unit cells on one surface of a folding separator;
fixing the unit cells on the folding separator;
providing a binder composition to at least one end portion of another surface of the folding separator; and
stacking the unit cells by folding the folding separator.

2. The method of claim 1, wherein the fixing of the unit cells is performed by heating and pressing the folding separator on which the unit cells are disposed.

3. The method of claim 1, wherein the binder composition is provided along a longitudinal direction of the folding separator.

4. The method of claim 1, wherein the binder composition is provided at an end portion in a direction in which an electrode tab of the unit cell is disposed.

5. The method of claim 1, wherein the providing of the binder composition is performed such that a binder application amount is in a range of 0.1 g/m² to 1.0 g/m².

6. The method of claim 1, wherein the binder composition is provided in a region at a distance of 0.15 W from an end of the folding separator when a width of the folding separator is W.

7. The method of claim 1, wherein the binder composition comprises an aqueous binder.

8. The method of claim 1, further comprising heating and pressing the electrode assembly in which the unit cells are stacked, after the stacking of the unit cells.

9. The method of claim 8, wherein the heating is performed at a temperature of 50°C to 150°C, and the pressing is performed under a pressure condition of 10 kPa to 300 kPa.

10. An electrode assembly in which a plurality of unit cells including a positive electrode, a separator, and a negative electrode are stacked by being wound by a long sheet-shaped folding separator,
wherein the unit cell comprises a sliding portion, in which a thickness of an electrode active material layer is reduced, at least one end of the unit cell, and
a binder coating layer is formed between the sliding portion and the folding separator.

11. The electrode assembly of claim 10, wherein the binder coating layer comprises an aqueous binder.

12. A secondary battery comprising the electrode assembly of claim 10 or claim 11.
